(19) **Europäisches Patentamt / European Patent Office / Office européen des brevets**

(11) **EP 1 527 445 B1**

(12) **EUROPEAN PATENT SPECIFICATION**

(45) Date of publication and mention
of the grant of the patent:
**20.08.2008 Bulletin 2008/34**

(51) Int Cl.:
**G11B 7/085** (2006.01)

(21) Application number: **03740991.9**

(86) International application number:
**PCT/IB2003/003110**

(22) Date of filing: **10.07.2003**

(87) International publication number:
**WO 2004/013848 (12.02.2004 Gazette 2004/07)**

(54) **DISC DRIVE APPARATUS**

PLATTENLAUFWERK

APPAREIL D'ENTRAINEMENT DE DISQUE

(84) Designated Contracting States:
**AT BE BG CH CY CZ DE DK EE ES FI FR GB GR HU IE IT LI LU MC NL PT RO SE SI SK TR**

(30) Priority: **30.07.2002 EP 02078132**

(43) Date of publication of application:
**04.05.2005 Bulletin 2005/18**

(73) Proprietor: **Koninklijke Philips Electronics N.V.
5621 BA Eindhoven (NL)**

(72) Inventor: **HEZEMANS, Cornelius, A.
NL-5656 AA Eindhoven (NL)**

(74) Representative: **Uittenbogaard, Frank
Philips
Intellectual Property & Standards
P.O. Box 220
5600 AE Eindhoven (NL)**

(56) References cited:
**DE-A- 4 243 234**        **US-A- 4 977 554**

• **PATENT ABSTRACTS OF JAPAN vol. 2000, no. 20, 10 July 2001 (2001-07-10) & JP 2001 067680 A (HITACHI LTD), 16 March 2001 (2001-03-16)**
• **PATENT ABSTRACTS OF JAPAN vol. 1998, no. 01, 30 January 1998 (1998-01-30) & JP 09 245354 A (HITACHI LTD), 19 September 1997 (1997-09-19)**

**Description**

The present invention relates in general to disc drive systems for storing information onto a disc-shaped storage medium or reading information from such disc-shaped storage medium, where the disc is rotated and a write/read head is moved radially with respect to the rotating disc. Although the present invention is also applicable in the case of magnetic disc systems, the present invention is specifically relating to optical or magnetooptical disc systems. Hereinafter, the present invention will be explained specifically for the case of an optical disc system, but it is to be understood that it is not intended to restrict the invention to optical disc systems.

As is commonly known, an optical storage disc comprises at least one track, either in the form of a continuous spiral or in the form of multiple concentric circles, of storage space where information may be stored. Optical discs may be read-only type, where information is recorded during manufacture, which data can only be read by a user. The optical storage disc may also be a writable type, where information may be stored by a user. For writing information in the storage space of the optical storage disc, or for reading information from the disc, an optical disc drive comprises, on the one hand, rotating means for receiving and rotating an optical disc, and on the other hand optical means for generating an optical beam, typically a laser beam, and for scanning the storage track with said laser beam. Since the technology of optical discs in general, the way in which information can be stored in an optical disc, and the way in which optical data can be read from an optical disc, is commonly known, it is not necessary here to describe this technology in more detail.

For receiving the optical disc, an optical disc drive usually comprises a carrier tray which is displaceable between a receiving position where the tray is located outside a disc drive housing so that a user can place a disc, and a scanning position where the disc is located inside said disc drive housing and can be rotated by the rotating means and accessed by the optical head.

For rotating the optical disc, an optical disc drive typically comprises a motor, which drives a hub engaging a central portion of the optical disc. Usually, the motor is implemented as a spindle motor, and the motor-driven hub may be arranged directly on the spindle axle of the motor.

For optically scanning the rotating disc, an optical disc drive comprises a light beam generator device (typically a laser diode), an objective lens for focussing the light beam in a focal spot on the disc, and an optical detector for receiving the reflected light reflected from the disc and for generating an electrical detector output signal.

During operation, the light beam should remain focussed on the disc. To this end, the objective lens is arranged axially displaceable, and the optical disc drive comprises focal actuator means for controlling the axial position of the objective lens. Further, the focal spot should remain aligned with a track or should be capable of being positioned with respect to a new track. To this end, at least the objective lens is mounted radially displaceable, and the optical disc drive comprises radial actuator means for controlling the radial position of the objective lens.

More particularly, the optical disc drive comprises a sledge which is displaceably guided with respect to a disc drive frame, which frame also carries the spindle motor for rotating the disc. The travel course of the sledge is arranged substantially radially with respect to the disc, and the sledge can be displaced over a range substantially corresponding to the range from inner track radius to outer track radius. Said radial actuator means comprise a controllable sledge drive, for instance comprising a linear motor, a stepper motor, or a worm gear motor.

The displacement of the sledge is intended for roughly positioning the optical lens. For fine-tuning the position of the optical lens, the optical disc drive comprises a lens platform which carries the objective lens and which is displaceably mounted with respect to said sledge. The displacement range of the platform with respect to the sledge is relatively small, but the positioning accuracy of the platform with respect to the sledge is larger than the positioning accuracy of the sledge with respect to the frame.

In a start-up phase, for instance when the optical disc drive is switched on, the radial position of the optical lens must be initialized. To this end, the sledge is moved towards a starting position with respect to a mechanical reference, i.e. a mechanical stop or a location close to such stop. A problem in this respect is that the current position of the sledge is not known. Further, the original position of the sledge is not known. Therefore, the sledge is moved "blindly" towards such mechanical stop acting as position reference, usually the inner extremity of its displacement range.

Unless a separate position detector is provided, the radial actuator mechanism does not know when the sledge meets its mechanical stop. Therefore, the mechanism must be prepared for a "worse case scenario", i.e. the case where the sledge is originally at its outermost position when the disc drive is switched on: this start position will require the longest time to reach the inner mechanical stop.

The sledge is driven with a certain predetermined velocity V. Therefore, in order to make sure that the sledge always reaches its innermost mechanical stop, the sledge is driven during a certain actuation time T, such that the following condition is met:

$$VT > R_O - R_I$$

wherein Ro indicates the outermost position of the sledge, while $R_I$ indicates the innermost position of the sledge, as determined by said mechanical stop.

The velocity V may not be selected too high, since this would result in a hard bump when the sledge meets the mechanical stop, which may cause damage and noise. Therefore, in view of the relatively moderate velocity and in order to meet the above-mentioned condition, said predetermined actuation time T is selected relatively high. On the other hand, if the original position of the sledge was not the outermost position, the sledge will reach the mechanical stop before said predetermined actuation time has passed.

In optical disc drives according to the prior art, actuation of the sledge continues until said predetermined actuation time T has ended. As a consequence, it takes relatively much time before the disc drive is ready for operation. Also, if actuation is continued while the sledge has already reached the mechanical stop, an undesirable rattling noise may be generated, especially in the case of a stepper motor.

An objective of the present invention is to propose a solution to the above-described problem.

More particularly, an objective of the present invention is to provide a sledge stop detection means capable of detecting when the sledge has reached a stop. Then, on the basis of an output signal from this detection means, a controller can switch off the drive actuator, or at least end the initializing phase.

In possible embodiments, the disc drive is provided with a separate position detector, directly measuring the position of the sledge. However, such would require additional hardware. Therefore, a further objective of the present invention is to provide a sledge stop detection means without incurring additional hardware.

It is noted that JP-09-245354 discloses a disc drive with a photosensor for recognizing that a bead is stabilized in an innermost periphery.

It is further noted that US-4.977.544 discloses a disc drive whith an up-down counter for detecting the position of a slider carrying a pickup.

It is further noted that JP-2001-067680 discloses a disc drive in which a speed of an objective lens as caused by an external vibration is detected by detecting the back electromotive voltage generated on a tracking actuator, and the speed in the tracking direction is reduced by operating an actuator controller. A similar teaching is disclosed by DE-42432334.

The present invention is based on the insight that, when the sledge reaches the mechanical stop, its velocity abruptly becomes zero, whereas the optical lens is carried by a platform which is displaceable with respect to the sledge, so that the optical lens and the platform tend to continue to move, driven by their mass inertia. In other words, when the sledge meets a mechanical stop, a radial displacement of the optical lens with respect to the sledge occurs. Based on this insight, according to an important aspect of the present invention, in contrast to measuring the absolute radial position of the sledge itself, the radial displacement of the optical lens relative to the sledge is measured, and a signal representing such displacement is analyzed and used as a basis to determine whether or not the sledge has met a mechanical stop.

More particularly, when the sledge meets a mechanical stop, there will develop a differential acceleration between the sledge and the platform, which will lead to a differential velocity and to a differential position. In the present text, the phrase "displacement" is used to cover "being in a displaced condition" (distance as a function of time) as well as to cover "undergoing an action of displacing" (velocity as a function of time; first derivative of distance).

In one embodiment, differential velocity of the optical lens with respect to the sledge is measured, for instance by measuring the back electro-motive force (emf) of the platform actuator. It is noted that a similar embodiment can be applied in the case of a magnetic disc system, in which case the displacement of a magnetic pickup with respect to the sledge is measured by measuring the back electro-motive force (emf) of the platform actuator.

In another embodiment, differential position of the optical lens with respect to the sledge is measured. In this respect, a particularly useful embodiment of the present invention is based on the further recognition that an output signal of an optical detector contains at least one signal component which corresponds to the radial displacement of the optical lens with respect to the light beam, as well as on the further recognition that this beam has a fixed location with respect to the sledge, so that said signal component corresponds to the radial displacement of the optical lens with respect to the sledge. Thus, based on this recognition, the present invention proposes to process an output signal of the optical detector such as to provide a signal component corresponding to the radial displacement of the optical lens with respect to the sledge, and to use this signal component as input signal for a controller controlling the sledge actuator.

In many drives, when the sledge actuator is activated to bring the sledge to an initial position, the radial platform actuator is not activated, in which case the stiffness of the platform with respect to the sledge will be determined substantially only by the coupling between sledge and platform. Then, the platform will actually be displaced with respect to the sledge in case of an abrupt stop of the sledge. However, in some drives the radial platform actuator is also activated during displacement of the sledge to its initial position. In such case, a controller controlling the radial platform actuator will receive a signal representing the differential position and/or differential velocity of the optical lens with respect to the sledge, and this controller will generate its control signal for the radial platform actuator such that said differential position and/or differential velocity of the optical lens with respect to the sledge is substantially maintained at a constant value (for instance zero). In view of the control action of such controller, the stiffness of the platform with respect to the sledge will have been increased, typically to such extent that measuring the differential position or differential velocity between the optical lens and the sledge is not likely to yield a useful signal.

For those cases, the present invention proposes to process the control output signal of the controller, as a measure of the force that needs to be exerted to keep the platform in place with respect to the sledge, i.e. a measure of the acceleration/deceleration that needs to be applied to the platform in order to keep the platform in place with respect to the sledge, i.e. a measure of the acceleration/deceleration of the sledge.

These and other aspects, features and advantages of the present invention will be further explained by the following description of the present invention with reference to the drawings, in which same reference numerals indicate same or similar parts, and in which:

> Figure 1A schematically shows displaceable components of an optical disc drive;
> Figure 1B schematically shows a sledge/platform combination;
> and Figure 2 is a flow diagram illustrating steps in a start-up phase of the disc drive in accordance with the present invention.

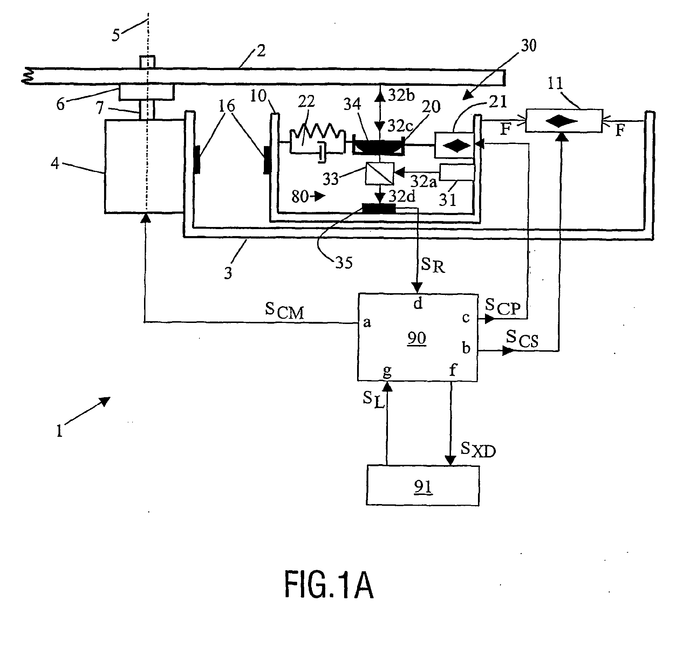

Figure 1A schematically illustrates an optical disc drive 1, suitable for storing information on or reading information from an optical disc 2. The disc drive apparatus 1 comprises an apparatus frame 3. For rotating the disc 2, the disc drive apparatus 1 comprises a motor 4 fixed to the frame 3, defining a rotation axis 5. For receiving and holding the disc 2, the disc drive apparatus 1 may comprise a turntable or clamping hub 6, which in the case of a spindle motor 4 is mounted on the spindle axle 7 of the motor 4.

The disc drive apparatus 1 further comprises a displaceable sledge 10, which is displaceably guided in the radial direction of the disc 2, i.e. in a direction substantially perpendicular to the rotation axis 5, by guiding means not shown for the sake of clarity. A mechanical end stop for the sledge 10 with respect to the apparatus frame 3 is schematically indicated at 16. A radial sledge actuator, designed for regulating the radial position of the sledge 10 with respect to the apparatus frame 3, is schematically indicated at 11. The force exerted by this actuator 11 is schematically indicated as arrows F. Since radial sledge actuators are known per se, while the present invention does not relate to the design and functioning of such radial sledge actuator, it is not necessary here to discuss the design and functioning of a radial sledge actuator in great detail.

The disc drive apparatus 1 further comprises a displaceable platform 20, which is displaceable in the radial direction of the disc 2 with respect to the sledge 10, and which is displaceably mounted with respect to the sledge 10 by mounting means not shown for the sake of clarity. A radial platform actuator arranged for radially displacing the platform 20 with respect to the sledge 10, is indicated at 21. Since such platform actuators are known per se, while further the design and operation of such platform actuator is no subject of the present invention, it is not necessary here to discuss the design and operation of such platform actuator in great detail.

For mounting and holding the platform 20 with respect to the sledge 10, a coupling is shown schematically at 22, which coupling has characteristics of elasticity, stiffness and damping.

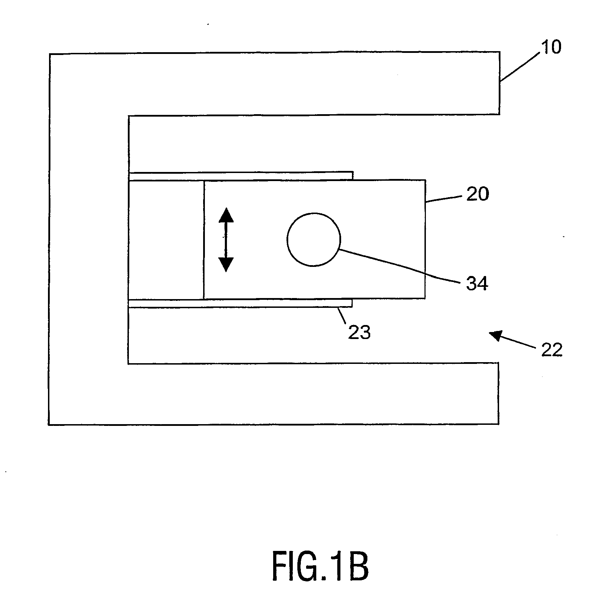

Figure 1B schematically illustrates a possible way of mounting the platform 20 with respect to the sledge 10. In the embodiment illustrated, the coupling 22 comprises spring wires 23, i.e. relatively thin, substantially one-dimensional members having their longitudinal axis directed approximately in the Y-direction, i.e. approximately perpendicular to the X-direction (radial direction) and the Z-direction (axial direction of light beam). These spring wires hold the platform 20 with respect to the sledge 10 in the absence of any external supportive forces. However, in the case of an external force exerted on the platform 20, the spring wires 23 bend relatively easily to allow a displacement of the platform 20 with respect to the sledge 10 in the X-direction and Z-direction. The spring wires 23 may have equal stiffness in X-direction and Z-direction, but it is also possible that the stiffness in Z-direction differs from the stiffness in X-direction.

A mounting of the platform 20 involving spring wires 23 to hold the platform 20 with respect to the sledge 10 is know per se. It is noted that the present invention is not limited to a mounting design involving spring wires: any other suitable mounting design can be used in the context of the present invention. However, it is important that the stiffness or elasticity of the mounting means, in this example the spring wires, is such as to allow radial displacement of platform 20 and sledge 10 with respect in case the sledge experiences a mechanical shock.

The disc drive apparatus 1 further comprises an optical system 30 for scanning tracks (not shown) of the disc 2 by an optical beam. More specifically, the optical system 30 comprises a light beam generating means 31, typically a laser such as a laser diode, which may be mounted with respect to the apparatus frame 3 or the sledge 10, and which is arranged to generate a light beam 32a which passes a beam splitter 33 and an objective lens 34 carried by the platform 20. The objective lens 34 focuses the light beam 32b on the disc 2. It is noted that the disc drive apparatus 1 also comprises focus servo means arranged for axially displacing the platform 20 in order to achieve and maintain focusing of the light beam 32b exactly on the desired location of the disc 2, but such focus servo means are not illustrated in figure 1 for sake of clarity.

The light beam 32b reflects from the disc 2 (reflected light beam 32c) and passes the objective lens 34 and the beam splitter 33 (beam 32d) to reach an optical detector 35 mounted with respect to the sledge 10. The optical detector 35 produces a read signal $S_R$.

Thus, the light beam 32 follows an optical path 80 which, at least partly, is substantially fixed with respect to the sledge 10.

The disc drive apparatus 1 further comprises a control unit 90 having a first output 90a connected to a control input of the motor 4, having a second output 90b coupled to a control input of the radial sledge actuator 11, and having a third output 90c coupled to a control input of the radial platform actuator 21. The control unit 90 is designed to generate at its first output 90a a control signal $S_{CM}$ for the motor 4, to generate at its second control output 90b a control signal $S_{CS}$ for the sledge actuator 11 in order to control said force F, and to generate at its third control output 90c a control signal $S_{CP}$ for the platform actuator 21.

As should be clear to a person skilled in the art, the read signal $S_R$ comprises at least one signal component which depends on the radial displacement of the objective lens 34 with respect to the light beam 32. Hence, this signal component corresponds to the displacement of the objective lens 34 with respect to the sledge 10. An example of such signal component, and a method and device for deriving such signal component from the read signal $S_R$, are disclosed in US-5.173.598, the contents of which is incorporated here by reference. Such signal component as described in said publication can be used in practicing the present invention.

In the following, any signal which is representative of radial displacement of the objective lens 34 with respect to the sledge 10 will be referred to as X-displacement signal $S_{XD}$.

Such X-displacement signal $S_{XD}$ needs not necessarily be derived from the optical read signal $S_R$. Within the context of the present invention, it is possible to derive an X-displacement signal $S_{XD}$ from other sources. For instance, in a case where the radial platform actuator 21 comprises an electromagnetic device, a displacement of the platform 20 with respect to the sledge 10 will induce a back-EMF in such electromagnetic device; such back-EMF is perfectly suitable to be received by the control unit 90 in order to be used as X-displacement signal $S_{XD}$. However, in the following, the present invention will be further explained referring to an exemplary embodiment wherein the X-displacement signal $S_{XD}$ is derived from the optical read signal $S_R$, without such explanation being intended to restrict the present invention to such embodiment.

In the exemplary embodiment illustrated in figure 1A, the control unit 90 further has a read signal input 90d for receiving the read signal $S_R$ from the optical detector 35, and the control unit 90 is designed for deriving from the read signal $S_R$ an X-displacement signal $S_{XD}$. The control unit 90 is further designed to provide this X-displacement signal $S_{XD}$ at an X-displacement output 90f to a decision unit 91. The decision unit 91 investigates the X-displacement signal $S_{XD}$ to determine whether this signal is indicative for a displacement large enough to indicate a stop of the sledge 10. Depending on the outcome of such investigation, the decision unit 91 will return a limit signal $S_L$ to a second input 90g of the control unit 90. In response, the control unit 90 will send a control signal $S_{CS}$ to the sledge actuator 11 terminating the force F exerted by this actuator, thus effectively limiting the actuation time of this actuator to the time needed to reach an end stop.

Thus, the actuation of this actuator is terminated if the sledge 10 bumps against its end stop 16. It is noted, however, that the actuation of this actuator is also terminated if the sledge 10 is blocked by any other cause than the end stop 16.

It is noted that the control unit 90 and the decision unit 91 are illustrated and discussed here as separate units, exchanging signals $S_{XD}$ and $S_L$. Although such separate implementation is feasible indeed, the control unit 90'and the decision unit 91 are, in a preferred embodiment, integrated as one single unit. Further, although the decision unit 91 may be implemented as a separate hardware device, the operation of the decision unit 91 is preferably implemented as a suitable programming of the integrated control and decision unit, either in software, hardware or firmware.

On the other hand, it is also possible to have the detector output signal $S_R$ received and to have the X-displacement signal ($S_{XD}$) derived therefrom by a component separate from the control unit 90.

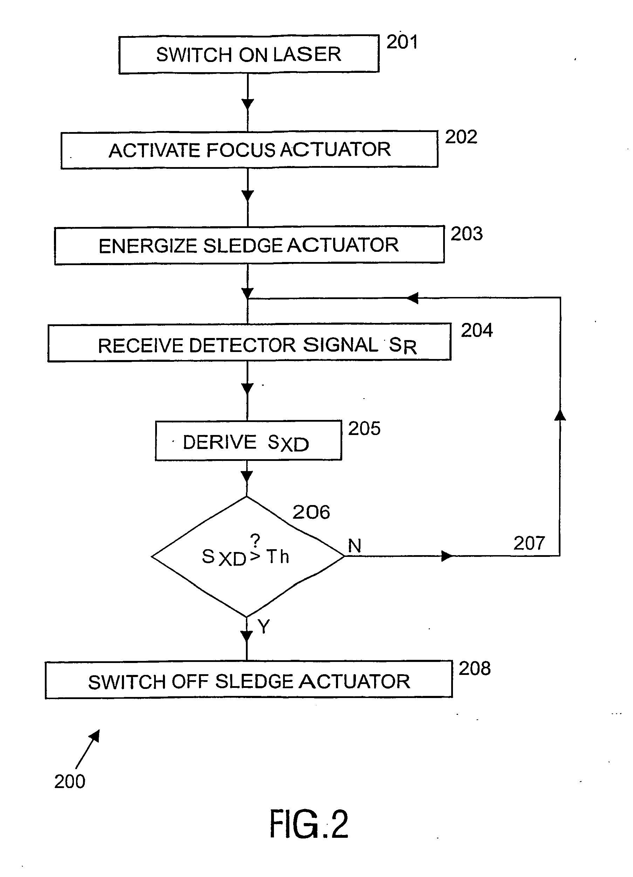

In the following, a method 200 for initializing the radial position of the optical lens 34 in a start-up phase of the disc drive apparatus 1 will be explained with reference to figure 2.

First, the light beam generating device 31 is switched on (step 201), and a focus actuator (not shown) is activated (step 202), such as to obtain a detector output signal $S_R$ for the control unit 90. It is noted that, in order to obtain such detector output signal $S_R$, it is not essential that the disc 2 is rotated.

Then, the control unit 90 generates a sledge control signal $S_{CS}$ in order to energize the radial sledge actuator 11 (step 203) so that said force F moves the sledge 10 towards an end position as defined by said end stop 16.

The control unit 90 receives the detector output signal $S_R$ (step 204), and derives therefrom (step 205) the X-displacement signal $S_{XD}$.

This X-displacement signal $S_{XD}$ is compared to a predefined threshold condition Th (step 206).

As long as the sledge 10 has not yet reached the radial end stop 16, the velocities of sledge 10 and platform 20 are substantially equal and the X-displacement signal $S_{XD}$ is substantially zero. Then, the above steps 204-206 are repeated, indicated as a return step 207.

However, at the moment when the sledge 10 bumps against the radial end stop 16, its velocity is reduced to zero almost immediately whereas the mass inertia of the platform 20 urges the platform 20 to maintain its velocity with respect to the apparatus frame 3. If no external forces are applied to the platform 20, the objective lens 34 is displaced with respect to the sledge 10, i.e. the platform 20 obtains a differential velocity with respect to the sledge 10 and a differential position with respect to the sledge 10, so that the X-displacement signal $S_{XD}$ rapidly increases. This situation is detected by the control unit 90 and/or the decision unit 91 because now the X-displacement signal $S_{XD}$ rises above the said threshold Th. In response, the control unit 90 generates its control signal $S_{CS}$ to switch off the radial sledge actuator 11 (step 208).

It is also possible that, while energizing the sledge actuator 11, the control unit 90 also generates a platform control signal $S_{CP}$ in order to energize the radial platform actuator 21. The control unit 90 receives the detector output signal $S_R$ (step 204), and derives therefrom (step 205) the X-displacement signal $S_{XD}$. Based on this signal, the control unit 90 forms a control loop with the detector 35 and the radial platform actuator 21, such as to try to effectively fix the platform 20 to the sledge 10. In other words, the control unit 90 generates its platform control signal $S_{CP}$ such that the X-displacement signal $S_{XD}$ is substantially maintained at zero. Now, the X-displacement signal $S_{XD}$ itself is less reliable as a signal indicating a stop of the sledge, because the control action of the control unit 90 has reduced the magnitude of the differential velocity and the differential position of the platform 20 with respect to the sledge 10. However, the platform control signal $S_{CP}$, which reflects the force needed to effectively counteract the differential velocity and the differential position, reflects the deceleration or acceleration of the sledge and can be used as measuring signal. So, in such case, the platform control signal $S_{CP}$ is compared to a threshold Th and, if it is found that the platform control signal $S_{CP}$ rises above the said threshold Th, the control unit 90 generates its control signal $S_{CS}$ to switch off the radial sledge actuator 11 (step 208).

It should be clear to a person skilled in the art that the present invention is not limited to the exemplary embodiments discussed above, but that various variations and modifications are possible within the protective scope of the invention as defined in the appending claims. For instance, the method proposed by the present invention is also suitable to detect a substantial deceleration or acceleration of the sledge.

Further, it is not necessary that the laser 31 and the detector 35 are fixed to the sledge 10. As an alternative, it is also possible that the laser 31 and/or the detector 35 are fixed to the apparatus frame 3. The light beam is coupled to the objective lens 34 by, for instance, a 90° mirror which is connected to the sledge, which effects a coupling of at least part of the light path 80 to the sledge.

**Claims**

1. Method for detecting a substantial deceleration or acceleration or stop of a radially moving sledge (10) of a disc drive apparatus (1) of a type comprising an apparatus frame (3) and radially displaceable scan means, said scan means comprising:

   - said sledge (10) radially displaceable with respect to said frame (3);
   - a platform (20) radially displaceable with respect to said sledge (10);

   the method **characterised by** comprising the step of detecting a radial displacement of said platform (20) with respect to said sledge (10).

2. A method according to claim 1, for use in a disc drive apparatus comprising an electromagnetic device in an actuator for displacing said platform with respect to said sledge, the method comprising the step of detecting a back-EMF in said electromagnetic device.

3. A method according to claim 1 or 2, for use in a disc drive apparatus comprising an optical system for scanning a disc, the optical system defining an optical path of which at least a part is substantially fixed with respect to the sledge and comprising an optical element which is fixed with respect to the platform; the method comprising the step of detecting an optical read signal and deriving therefrom a signal representing the vodiol displacerrant of said optical elament with vespect to the sledge .

4. A method according to any of claims 1-3, wherein it is determined that a substantial deceleration or acceleration or stop of the sledge occurs when a detected radial displacement of said platform with respect to said sledge exceeds a predetermined decision threshold.

5. A method according to claim 2 or 3, wherein an actuator is activated such as to counteract a radial displacement of said platform with respect to said sledge; the method comprising the step of detecting an actuator control signal.

6. A method according to claim 5, wherein it is determined that a substantial deceleration or acceleration or stop of the sledge occurs when the detected actuator control signal exceeds a predetermined decision threshold.

7. A method for initializing the radial position of an optical lens in a start-up phase of a disc drive apparatus, the method comprising the steps of:

   - exerting a force on said sledge;
   - detecting a substantial deceleration or stop of the sledge using a method according to any of the previous claims;
- stopping said force as soon as a substantial radial displacement of said platform with respect to said sledge is detected.

8. Disc drive apparatus (1), comprising an apparatus frame (3) and radially displaceable scan means, said scan means comprising:

- a sledge (10) radially displaceable with respect to said frame (3);
- a platform (20) radially displaceable with respect to said sledge (10);

said apparatus (1) comprising:

- sledge stop detection means for detecting that the moving sledge (10) comes to a standstill or is subjected to a substantial deceleration or acceleration;
- **characterised in that** said sledge stop detection means comprising radial displacement detection means for detecting a radial displacement of said platform (20) with respect to said sledge (10).

9. Apparatus according to claim 8, further comprising:

- an electro-motive platform actuator for displacing said platform with respect to said sledge;

wherein said radial displacement detection means are designed to detect a back-EMF in said electro-motive platform actuator.

10. Apparatus according to claim 8 or 9, further comprising:

- an optical system for scanning a disc, the optical system defining an optical path of which at least a part is substantially fixed with respect to the sledge and comprising an optical element which is fixed with respect to the platform;

wherein said radial displacement detection means are designed to detect an optical read signal and to derive therefrom a signal representing the radical displacement of said optical element with respect to the sledge representing the radical displacement of said optical element with respect to the sledge .

11. Apparatus according to any of claims 8-10, wherein said radial displacement detection means are designed to determine that a substantial deceleration or acceleration or stop of the sledge occurs when a detected radial displacement of said platform with respect to said sledge exceeds a predetermined decision threshold.

12. Apparatus according to any of claims 8-10, further comprising:

- a controllable platform actuator associated with said sledge and said platform for radially displacing said platform with respect to said sledge;
- a control unit generating a platform control signal for said platform actuator such as to counteract a radial displacement of said platform with respect to said sledge;

wherein said radial displacement detection means are designed to detect said actuator control signal.

13. Apparatus according to claim 12, wherein said radial displacement detection means are designed to determine that a substantial deceleration or acceleration or stop of the sledge occurs when a detected actuator control signal exceeds a predetermined decision threshold.

14. Apparatus according to any of claims 8-13, further comprising:

- a controllable sledge actuator for moving the sledge radially with respect to said apparatus frame;
- a control unit for controlling said sledge actuator;

said control unit being responsive to said radial displacement detection means to switch off said sledge actuator when said radial displacement detection means indicate that said moving sledge has come to a standstill.

15. Apparatus according to claim 14, wherein a displacement range of said sledge with respect to said apparatus frame is restricted by at least one end stop; wherein said control unit is designed, in an initializing phase, to energize said sledge actuator such as to move said sledge towards said end stop; and wherein said control unit switches off said actuator as soon as said sledge has reached said end stop.

**Patentansprüche**

1. Verfahren zum Detektieren einer wesentlichen Entschleunigung oder Beschleunigung oder eines Stopps eines sich radial verlagernden Schlittens (10) eines Plattenlaufwerkes von einem Typ mit einem Geräterahmen (3) und mit sich radial verlagerbaren Abtastmitteln, wobei die genannten Abtastmittel Folgendes umfassen:

- den genannten Schlitten (10), der gegenüber dem genannten Rahmen (3) in radialer Richtung verlagerbar ist;

- eine Plattform (20), die gegenüber dem genannten Schlitten (10) in radialer Richtung verlagerbar ist;

wobei das Verfahren **dadurch gekennzeichnet ist, dass** es den Verfahrensschritt der Detektion einer radialen Verlagerung der genannten Plattform (20) gegenüber dem genannten Schlitten (10) umfasst.

2. Verfahren nach Anspruch 1, zur Anwendung in einem Plattenlaufwerk mit einer elektromagnetischen Einrichtung in einem Stellglied zur Verlagerung der genannten Plattform gegenüber dem genannten Schlitten, wobei das Verfahren den Verfahrensschritt der Detektion einer Rückwärts-EMK in der genannten elektromagnetischen Einrichtung umfasst.

3. Verfahren nach Anspruch 1 oder 2, zur Anwendung in einem Plattenlaufwerk mit einem optischen System zur Abtastung einer Platte, wobei das optische System eine optische Strecke definiert, von der ein Teil gegenüber dem Schlitten im Wesentlichen fest liegt und wobei das optische System ein optisches Element aufweist, das gegenüber der Plattform fest liegt;

wobei das Verfahren den Verfahrensschritt der Detektion eines optischen Auslesesignals und der Herleitung eines Signals davon umfasst, das die radiale Verlagerung des genannten optischen Elementes gegenüber dem Schlitten darstellt.

4. Verfahren nach einem der vorstehenden Ansprüche 1 bis 3, wobei ermittelt wird, dass eine wesentliche Entschleunigung oder Beschleunigung oder aber ein Stopp des Schlittens auftritt, wenn eine detektierte radiale Verlagerung der genannten Plattform gegenüber dem genannten Schlitten eine vorbestimmte Entscheidungsschwelle übersteigt.

5. Verfahren nach Anspruch 2 oder 3, wobei ein Stellglied derart aktiviert wird, dass es einer radialen Verlagerung der genannten Plattform gegenüber dem genannten Schlitten entgegenwirkt;

wobei das Verfahren den Verfahrensschritt der Detektion eines Stellgliedsteuersignals umfasst.

6. Verfahren nach Anspruch 5, wobei ermittelt wird, dass eine wesentliche Entschleunigung, Beschleunigung oder ein Stopp des Schlittens auftritt, wenn das detektierte Stellgliedsteuersignal eine vorbestimmte Entscheidungsschwelle übersteigt.

7. Verfahren zum Initialisieren der radialen Lage einer optischen Linse in eine Startphase eines Plattenlaufwerkes, wobei das Verfahren die nachfolgenden Verfahrensschritte umfasst:

- das Ausüben einer Kraft auf den genannten Schlitten,
- das Detektieren einer wesentlichen Entschleunigung oder eines Stopps des Schlittens, unter Anwendung eines Verfahrens nach einem der vorstehenden Ansprüche,
- das Beenden der Kraftausübung, sobald eine wesentliche radiale Verlagerung der genannten Plattform gegenüber dem genannten Schlitten detektiert wird.

8. Plattenlaufwerk (1) mit einem Geräterahmen (3) und mit radial verlagerbaren Abtastmitteln, wobei die genannten Abtastmittel Folgendes umfassen:

- einen Schlitten (10), der gegenüber dem genannten Rahmen (3) radial verlagerbar ist,
- eine Plattform (20), die gegenüber dem genannten Schlitten (10) radial verlagerbar ist,

wobei das genannte Laufwerk Folgendes umfasst:

- Schlittenstoppdetektionsmittel um zu detektieren, dass der sich verlagernde Schlitten (10) zum Stillstand gelangt oder eine wesentliche Entschleunigung oder Beschleunigung erfahrt, **dadurch gekennzeichnet, dass** die genannten Schlittenstoppdetektionsmittel Radialverlagerungsdetektionsmittel zum Detektieren einer radialen Verlagerung der genannten Plattform (20) gegenüber dem genannten Schlitten (10) aufweisen.

9. Laufwerk nach Anspruch 8, das weiterhin Folgendes umfasst:

- ein elektromotorisches Plattformstellglied zum Verlagern der genannten Plattform gegenüber dem genannten Schlitten,

wobei die genannten Radialverlagerungsdetektionsmittel dazu vorgesehen sind, eine Rückwärts-EMK in dem genannten elektromotorischen Plattformstellglied zu detektieren.

10. Laufwerk nach Anspruch 8 oder 9, das weiterhin Folgendes umfasst:

- ein optisches System zum Abtasten einer Platte, wobei das optische System eine optische Strecke definiert, von der wenigstens ein Teil gegenüber dem Schlitten im Wesentlichen fest liegt und wobei das optische System ein optisches Element aufweist, das gegenüber der Plattform fest ist,

wobei die genannten Radialverlagerungsdetektionsmittel dazu vorgesehen sind, ein optisches Auslesesignal zu detektieren und daraus ein Signal herzuleiten, das die radiale Verlagerung des genannten optischen Elementes gegenüber dem Schlitten darstellt.

11. Laufwerk nach Anspruch 8 bis 10, wobei die genannten Radialverlagerungsdetektionsmittel dazu vorgesehen sind, zu ermitteln, dass eine wesentliche Entschleunigung oder Beschleunigung oder ein Stopp des Schlittens auftritt, wenn eine detektierte Radialverlagerung der genannten Plattform gegenüber dem genannten Schlitten eine vorbestimmte Entscheidungsschwelle übersteigt.

12. Laufwerk nach einem der Ansprüche 8 bis 10, das weiterhin Folgendes umfasst:

- ein steuerbares Plattformstellglied, assoziiert mit dem genannten Schlitten und der genannten Plattform zur radialen Verlagerung der genannten Plattform gegenüber dem genannten Schlitten,
- eine Steuereinheit, die ein Plattformsteuersignal für das genannte Plattformstellglied erzeugt, und zwar zum Entgegenwirken einer Radialverlagerung der genannten Plattform gegenüber dem genannten Schlitten,

wobei die genannten Radialverlagerungsdetektionsmittel dazu vorgesehen sind, das genannte Stellgliedsteuersignal zu detektieren.

13. Laufwerk nach Anspruch 12, wobei die genannten Radialverlagerungsdetektionsmittel dazu vorgesehen sind, zu ermitteln, dass eine wesentliche Entschleunigung oder Beschleunigung oder aber ein Stopp des Schlittens auftritt, wenn ein detektiertes Stellgliedsteuersignal einen vorbestimmte Entscheidungsschwelle übersteigt.

14. Laufwerk nach einem der Ansprüche 8 bis 13, das weiterhin Folgendes umfasst:

- ein steuerbares Schlittenstellglied zur Verlagerung des Schlittens in radialer Richtung gegenüber dem genannten Laufwerkrahmen,
- eine Steuereinheit zur Steuerung des genannten Schlittenstellglieds,

wobei die genannte Steuereinheit dafür sorgt, dass die genannten Radialverlagerungsdetektionsmittel das genannte Schlittenstellglied abschalten, wenn die genannten Radialverlagerungsdetektionsmittel angeben, dass der genannte sich verlagernde Schlitten zum Stillstand gelangt ist.

15. Laufwerk nach Anspruch 14, wobei ein Verlagerungsgebiet des genannten Schlittens gegenüber dem genannten Laufwerkrahmen durch wenigstens einen Endstopp begrenzt wird, wobei die genannte Steuereinheit dazu vorgesehen ist, in einer Anfangsphase, das genannte Schlittenstellglied derart mit Energie zu versehen, dass der genannte Schlitten in Richtung des genannten Endstopps sich verlagert, und wobei die genannte Steuereinheit das genannte Stellglied abschaltet, sobald der genannte Schlitten den genannten Endstopp erreicht hat.

## Revendications

1. Procédé permettant de détecter une décélération ou une accélération sensible ou un arrêt d'une masse se déplaçant dans le sens radial (10) d'un appareil d'entraînement de disque (1) d'un type comprenant un châssis d'appareil (3) et des moyens de balayage déplaçables dans le sens radial, lesdits moyens de balayage comprenant :

- ladite masse (10) déplaçable dans le sens radial par rapport audit châssis (3);
- une plate-forme (20) déplaçable dans le sens radial par rapport à ladite masse (10);

le procédé étant **caractérisé en ce qu'**il comprend l'étape de détection d'un déplacement radial de ladite plate-forme (20) par rapport à ladite masse (10).

2. Procédé suivant la revendication 1, destiné à être utilisé dans un appareil d'entraînement de disque comprenant un dispositif électromagnétique dans un actionneur pour déplacer ladite plate-forme par rapport à ladite masse, le procédé comprenant l'étape de détection d'une force contre-électromotrice dans ledit dispositif électromagnétique.

3. Procédé suivant la revendication 1 ou 2, destiné à être utilisé dans un appareil d'entraînement de disque comprenant un système optique pour balayer un disque, le système optique définissant un chemin optique dont une partie au moins est sensiblement fixe par rapport à la masse et comprenant un élément optique qui est fixe par rapport à la plate-forme; le procédé comprenant l'étape de détection d'un signal de lecture optique et la dérivation de celui-ci d'un signal représentant le déplacement radial dudit élément optique par rapport à la masse.

4. Procédé suivant l'une quelconque des revendications 1 à 3, dans lequel il est déterminé qu'une décélération ou une accélération sensible ou un arrêt de la masse survient lorsqu'un déplacement radial détecté de ladite plate-forme par rapport à ladite masse dépasse un seuil de décision prédéterminé.

**5.** Procédé suivant la revendication 2 ou 3, dans lequel un actionneur est activé de manière à contrebalancer un déplacement radial de ladite plate-forme par rapport à ladite masse;

le procédé comprenant l'étape de détection d'un signal de commande d'actionneur.

**6.** Procédé suivant la revendication 5, dans lequel il est déterminé qu'une décélération ou une accélération sensible ou un arrêt de la masse survient lorsque le signal de commande d'actionneur détecté dépasse un seuil de décision prédéterminé.

**7.** Procédé permettant d'initialiser la position radiale d'une lentille optique lors d'une phase de démarrage d'un appareil d'entraînement de disque, le procédé comprenant les étapes suivantes :

- l'exercice d'une force sur ladite masse;
- la détection d'une décélération sensible ou d'un arrêt de la masse en utilisant un procédé suivant l'une quelconque des revendications précédentes;
- l'arrêt de ladite force dès qu'un déplacement radial sensible de ladite plate-forme par rapport à ladite masse est détecté.

**8.** Appareil d'entraînement de disque (1), comprenant un châssis d'appareil (3) et des moyens de balayage déplaçables dans le sens radial, lesdits moyens de balayage comprenant :

- une masse (10) déplaçable dans le sens radial par rapport audit châssis (3);
- une plate-forme (20) déplaçable dans le sens radial par rapport à ladite masse (10);

ledit appareil (1) comprenant:

- des moyens de détection d'arrêt de la masse pour détecter que la masse en mouvement (10) s'arrête ou est soumise à une décélération ou à une accélération sensible;
- **caractérisé en ce que** lesdits moyens de détection d'arrêt de la masse comprennent des moyens de détection de déplacement radial pour détecter un déplacement radial de ladite plate-forme (20) par rapport à ladite masse (10).

**9.** Appareil suivant la revendication 8, comprenant en outre :

- un actionneur de plate-forme à force électromotrice pour déplacer ladite plate-forme par rapport à ladite masse;

dans lequel lesdits moyens de détection de déplacement radial sont conçus pour détecter une force contre-électromotrice dans ledit actionneur de plate-forme à force électromotrice.

**10.** Appareil suivant la revendication 8 ou 9, comprenant en outre :

- un système optique pour balayer un disque, le système optique définissant un chemin optique dont une partie au moins est sensiblement fixe par rapport à la masse et comprenant un élément optique qui est fixe par rapport à la plate-forme;

dans lequel lesdits moyens de détection de déplacement radial sont conçus pour détecter un signal de lecture optique et pour dériver de celui-ci un signal représentant le déplacement radial dudit élément optique par rapport à la masse.

**11.** Appareil suivant l'une quelconque des revendications 8 à 10, dans lequel lesdits moyens de détection de déplacement radial sont conçus pour déterminer qu'une décélération ou une accélération sensible ou un arrêt de la masse survient lorsqu'un déplacement radial détecté de ladite plate-forme par rapport à ladite masse dépasse un seuil de décision prédéterminé.

**12.** Appareil suivant l'une quelconque des revendications 8 à 10, comprenant en outre :

- un actionneur de plate-forme pouvant être commandé associé à ladite masse et à ladite plate-forme pour déplacer dans le sens radial ladite plate-forme par rapport à ladite masse;
- une unité de commande générant un signal de commande de plate-forme pour ledit actionneur de plate-forme de manière à contrebalancer un déplacement radial de ladite plate-forme par rapport à ladite masse;

dans lequel lesdits moyens de détection de déplacement radial sont conçus pour détecter ledit signal de commande d'actionneur.

**13.** Appareil suivant la revendication 12, dans lequel lesdits moyens de détection de déplacement radial sont conçus pour déterminer qu'une décélération ou une accélération sensible ou un arrêt de la masse survient lorsqu'un signal de commande d'actionneur détecté dépasse un seuil de décision prédéterminé.

**14.** Appareil suivant l'une quelconque des revendications 8 à 13, comprenant en outre :

- un actionneur de masse pouvant être commandé pour déplacer la masse dans le sens radial par rapport audit châssis d'appareil;

- une unité de commande pour commander ledit actionneur de masse;

ladite unité de commande réagissant auxdits moyens de détection de déplacement radial pour couper ledit actionneur de masse lorsque lesdits moyens de détection de déplacement radial indiquent que ladite masse en mouvement s'est arrêtée.

15. Appareil suivant la revendication 14, dans lequel une plage de déplacement de ladite masse par rapport audit châssis d'appareil est limitée par au moins une butée de fin de course;
dans lequel ladite unité de commande est conçue pour, lors d'une phase d'initialisation, exciter ledit actionneur de masse de manière à déplacer ladite masse vers ladite butée de fin de course;
et dans lequel ladite unité de commande coupe ledit actionneur dès que ladite masse a atteint ladite butée de fin de course.

EP 1 527 445 B1

FIG.1A

12

# FIG.1B

```
┌─────────────────────────────┐
│      SWITCH ON LASER         │  201
└─────────────────────────────┘
              │
              ▼
┌─────────────────────────────┐
│    ACTIVATE FOCUS ACTUATOR   │  202
└─────────────────────────────┘
              │
              ▼
┌─────────────────────────────┐
│   ENERGIZE SLEDGE ACTUATOR   │  203
└─────────────────────────────┘
              │
              ▼
┌─────────────────────────────┐
│  RECEIVE DETECTOR SIGNAL $S_R$ │  204
└─────────────────────────────┘
              │
              ▼
     ┌─────────────────┐
     │  DERIVE $S_{XD}$   │  205
     └─────────────────┘
              │
              ▼              206
         ◇─────────◇
        ╱     ?     ╲      N         207
       ◇ $S_{XD} > Th$ ◇────────────►
        ╲           ╱
         ◇─────────◇
              │ Y
              ▼
┌─────────────────────────────┐
│  SWITCH OFF SLEDGE ACTUATOR  │  208
└─────────────────────────────┘
```

200

# FIG.2

**EP 1 527 445 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 09245354 A
- US 4977544 A
- JP 2001067680 A
- DE 42432334
- US 5173598 A